# EUROPEAN PATENT SPECIFICATION

(11) **EP 3 760 910 B1**
(45) Date of publication and mention of the grant of the patent: **31.07.2024**
(21) Application number: 19760358.2
(22) Date of filing: 04.03.2019
(51) Int. Cl.: F17C 3/08, B63B 25/16, B65D 90/02

(54) **DOUBLE-SHELL TANK AND LIQUEFIED GAS CARRIER SHIP**
DOPPELWANDIGER TANK UND FLÜSSIGGASTRÄGERSCHIFF
RÉSERVOIR À DOUBLE ENVELOPPE ET NAVIRE TRANSPORTEUR DE GAZ LIQUÉFIÉ

(30) Priority: 02.03.2018 JP 2018037208
(43) Date of publication of application: 06.01.2021
(73) Proprietor: Kawasaki Jukogyo Kabushiki Kaisha, Hyogo 650-8670 (JP)
(72) Inventor: UEDA, Yuichiro, Kobe-shi Hyogo 650-8670 (JP); YOSHIDA, Takumi, Kobe-shi Hyogo 650-8670 (JP); EGUCHI, Yuzo, Kobe-shi Hyogo 650-8670 (JP); IZUMI, Naruyoshi, Kobe-shi Hyogo 650-8670 (JP); SANO, Atsushi, Kobe-shi Hyogo 650-8670 (JP); IMAI, Tatsuya, Kobe-shi Hyogo 650-8670 (JP)
(74) Representative: Dehns
(86) International application number: PCT/JP2019/008288
(87) International publication number: WO 2019/168196

(56) References cited:
- EP-A1- 2 937 297
- EP-A1- 3 012 508
- EP-A1- 3 012 509
- WO-A1-2017/069196
- JP-A- 2011 007 320
- JP-A- 2013 006 613
- JP-A- 2014 118 206
- JP-A- 2015 004 383
- JP-U- S63 141 097

## Description

### Technical Field

The present invention relates to a double-shell tank and a liquefied gas carrier ship including the double-shell tank.

### Background Art

Conventionally, there has been a known double-shell tank for low-temperature liquefied gas. For example, Patent Literature 1 discloses a double-shell tank in which a vacuum thermal insulation layer is formed between an inner shell and an outer shell.

Specifically, the inner shell includes an inner shell main part and an inner shell dome. The inner shell main part stores liquefied gas, and the inner shell dome protrudes upward from the inner shell main part. The outer shell includes an outer shell main part and an outer shell dome. The outer shell main part surrounds the inner shell main part, and the outer shell dome surrounds the inner shell dome. The inner shell dome is intended for putting pipes penetrating the inner shell into one place. These pipes are disposed in a manner to penetrate the inner shell dome and the outer shell dome. The space between the inner shell main part and the outer shell main part is a first vacuum space, and the space between the inner shell dome and the outer shell dome is a second vacuum space.

When the liquefied gas is fed into the inner shell, thermal contraction of the inner shell occurs. In the double-shell tank of Patent Literature 1, a bellows is incorporated in the outer shell dome in order to prevent a great stress from being applied to the pipes due to the thermal contraction of the inner shell. The bellows divides the outer shell dome into an upper movable portion and a lower fixed portion. The movable portion is penetrated by the pipes.

The movable portion of the outer shell dome is supported by the inner shell dome. FIG. 12 of Patent Literature 1 discloses a configuration in which the movable portion of the outer shell dome is supported by a suspending structure. Specifically, an inner ring, a cylindrical partition wall, and an outer ring are disposed in the second vacuum space between the inner shell dome and the outer shell dome. The inner ring is fixed to the inner shell dome. Below the inner ring, the outer ring is fixed to the movable portion of the outer shell dome. The partition wall couples the inner ring and the outer ring.

The partition wall also serves to partition off the second vacuum space into a lower vacuum space and an upper vacuum space. In FIG. 12 of Patent Literature 1, an inner shell manhole is provided in the upper portion of the inner shell dome, and an outer shell manhole is provided in the upper portion of the outer shell dome. In the vacuum thermal insulation layer, the volume of space in which the pressure becomes the atmospheric pressure when the outer shell manhole is opened is small since the second vacuum space is partitioned off by the partition wall into the lower vacuum space and the upper vacuum space.

### Citation List

### Patent Literature

PTL 1: Japanese Laid-Open Patent Application Publication No. 2015-4383. EP 3 012 508 discloses a double-shell tank according to the prior art.

### Summary of Invention

### Technical Problem

In the configuration shown in FIG. 12 of Patent Literature 1, the vacuum thermal insulation layer between the inner shell and the outer shell prevents heat from entering the inside of the inner shell from the outside of the outer shell. However, there is a demand that the entry of heat due to thermal conduction via the outer ring, the partition wall, and the inner ring be further reduced. Considering the demand, it is desirable to reduce the thickness of the partition wall. However, in terms of the strength of the joints between the partition wall and the outer ring, and between the partition wall and the inner ring, it is desirable for the partition wall to have a great thickness.

In view of the above, an object of the present invention is to provide a double-shell tank that makes it possible to reduce the entry of heat via the outer ring, the partition wall, and the inner ring while keeping sufficient strength of the joints between the partition wall and the outer ring, and between the partition wall and the inner ring, and to provide a liquefied gas carrier ship including the double-shell tank.

### Solution to Problem

In order to solve the above-described problems, a double-shell tank of the present invention includes: an inner shell including an inner shell main part and an inner shell dome, the inner shell main part storing liquefied gas, the inner shell dome protruding upward from the inner shell main part; an inner shell manhole provided in an upper portion of the inner shell dome; an outer shell including an outer shell main part and an outer shell dome, the outer shell main part surrounding the inner shell main part with a first vacuum space formed between the outer shell main part and the inner shell main part, the outer shell dome surrounding the inner shell dome with a second vacuum space formed between the outer shell dome and the inner shell dome; an outer shell manhole provided in an upper portion of the outer shell dome; a bellows incorporated in the outer shell dome, such that the bellows divides the outer shell dome into a lower fixed portion and an upper movable portion; an inner ring fixed to the inner shell dome in the second vacuum space; an outer ring fixed to the movable portion of the outer shell dome in the second vacuum space, the outer ring being positioned below the inner ring; and a cylindrical partition wall that couples the inner ring and the outer ring, and partitions off the second vacuum space into an upper vacuum space and a lower vacuum space, the upper vacuum space being a space including a region between the inner shell manhole and the outer shell manhole. A middle portion of the partition wall is less thick than both end portions of the partition wall.

According to the above configuration, the middle portion of the partition wall has a reduced thickness. Therefore, as compared to a case where the partition wall is a cylindrical wall having a constant thickness, the entry of heat via the outer ring, the partition wall, and the inner ring can be reduced. In addition, when thermal contraction of the inner shell occurs, the inner shell dome is also reduced in diameter. At the time, since the middle portion of the partition wall has a reduced thickness, the partition wall becomes deformed such that the cross section of the partition wall becomes substantially S-shaped. As a result, a great stress is prevented from being applied to the joint between the partition wall and the outer ring and the joint between the partition wall and the inner ring. This makes it possible to keep sufficient strength of the joints between the partition wall and the outer ring, and between the partition wall and the inner ring.

An outer circumferential surface of the partition wall may be recessed inward in a radial direction at the middle portion of the partition wall. According to this configuration, the cross-sectional area of the middle portion of the partition wall as seen in the axial direction of the inner shell dome is less than in a case where the inner circumferential surface of the partition wall is recessed outward in the radial direction at the middle portion. Therefore, as compared to the case where the inner circumferential surface of the partition wall is recessed outward in the radial direction at the middle portion, the entry of heat via the outer ring, the partition wall, and the inner ring can be reduced effectively.

A liquefied gas carrier ship of the present invention includes the above double-shell tank.

### Advantageous Effects of Invention

The present invention makes it possible to reduce the entry of heat via the outer ring, the partition wall, and the inner ring while keeping sufficient strength of the joints between the partition wall and the outer ring, and between the partition wall and the inner ring.

### Brief Description of Drawings

FIG. 1 is a sectional view of a double-shell tank according to one embodiment of the present invention.
FIG. 2 is an enlarged sectional view of an essential part of FIG. 1.
FIG. 3 is an enlarged sectional view of an essential part of FIG. 2.
FIG. 4 shows a state where an inner shell dome becomes reduced in diameter.

### Description of Embodiments

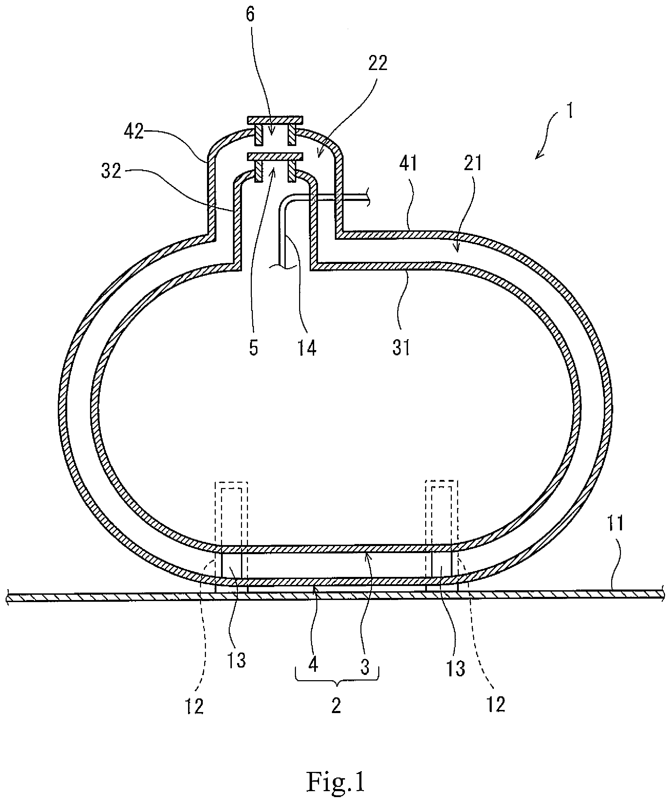

FIG. 1 shows a double-shell tank 2 according to one embodiment of the present invention. The double-shell tank 2 is installed, for example, as a cargo tank in a liquefied gas carrier ship 1. However, the double-shell tank 2 need not be installed as a cargo tank in the liquefied gas carrier ship 1, but may be installed as a fuel tank in a different type of ship. Alternatively, the double-shell tank 2 may be installed on the ground.

In the present embodiment, the double-shell tank 2 is a horizontally long cylindrical tank. Alternatively, the double-shell tank 2 may have a spherical, cubic, or rectangular parallelepiped shape.

The double-shell tank 2 includes an inner shell 3 and an outer shell 4. A vacuum thermal insulation layer is formed between the inner shell 3 and the outer shell 4. A pair of saddles 12 is provided in a hull 11. The saddles 12 support the outer shell 4 at respective positions that are spaced apart from each other in the axial direction of the double-shell tank 2. Between the inner shell 3 and the outer shell 4, a pair of support members 13 is disposed. The support members 13 support the inner shell 3 at the same positions as the saddles 12.

Specifically, the inner shell 3 includes an inner shell main part 31 and an inner shell dome 32. The inner shell main part 31 stores liquefied gas. The inner shell dome 32 protrudes upward from the inner shell main part 31. The outer shell 4 includes an outer shell main part 41 and an outer shell dome 42. The outer shell main part 41 surrounds the entire inner shell main part 31 with a first vacuum space 21 formed between the outer shell main part 41 and the inner shell main part 31. The outer shell dome 42 surrounds the entire inner shell dome 32 with a second vacuum space 22 formed between the outer shell dome 42 and the inner shell dome 32.

For example, the liquefied gas is liquefied petroleum gas (LPG, about -45°C), liquefied ethylene gas (LEG, about -100°C), liquefied natural gas (LNG, about -160°C), liquefied hydrogen (LH₂, about -250°C), or liquefied helium (LHe, about -270°C).

The inner shell main part 31 includes a body portion and hemispherical sealing portions. The body portion extends in the horizontal direction with a constant cross-sectional shape, and the hemispherical sealing portions seal openings on both sides of the body portion. Alternatively, each sealing portion may have a flat shape perpendicular to the body portion, or may be dish-shaped. The inner shell dome 32 protrudes upward from the body portion of the inner shell main part 31. In the present embodiment, the protruding direction of the inner shell dome 32 is parallel to the vertical direction. Alternatively, the protruding direction of the inner shell dome 32 may be slightly inclined relative to the vertical direction.

The inner shell dome 32 is intended for putting a plurality of pipes 14 penetrating the inner shell into one place (FIG. 1 shows only one pipe 14 for the sake of simplifying the drawing). These pipes 14 are disposed in a manner to penetrate the inner shell dome 32 and the outer shell dome 42.

The outer shell main part 41 has such a shape that the inner shell main part 31 has been enlarged. Specifically, the outer shell main part 41 includes a body portion and hemispherical sealing portions. The body portion extends in the horizontal direction with a constant cross-sectional shape, and has a greater diameter than that of the body portion of the inner shell main part 31. The hemispherical sealing portions seal openings on both sides of the body portion. The outer shell dome 42 also has such a shape that the inner shell dome 32 has been enlarged.

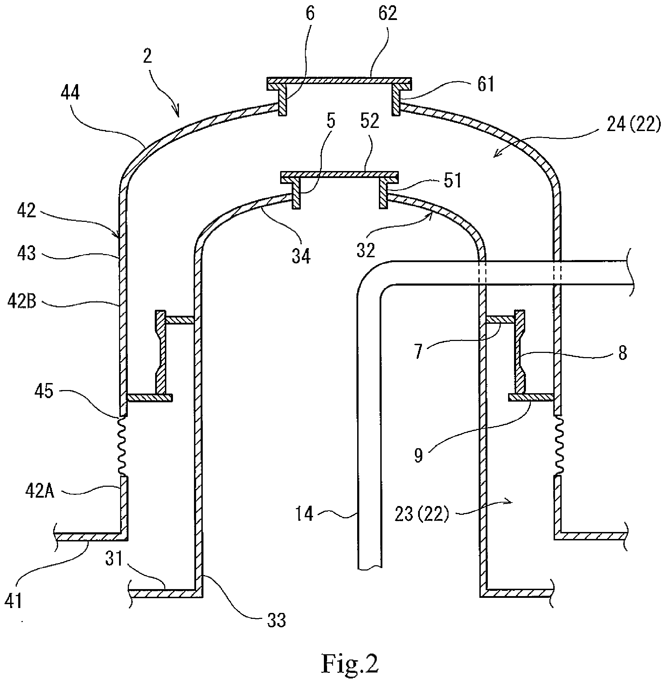

Next, the inner shell dome 32 and the outer shell dome 42 are described in detail with reference to FIG. 2.

The inner shell dome 32 includes a tubular peripheral wall 33 and a ceiling wall 34. The peripheral wall 33 rises from the inner shell main part 31, and the ceiling wall 34 seals an upper opening of the peripheral wall 33. An inner shell manhole 5 is provided in the upper portion of the inner shell dome 32. In the present embodiment, the inner shell manhole 5 is provided in the ceiling wall 34. In the illustrated example, the inner shell manhole 5 is provided at the center of the ceiling wall 34. Alternatively, the inner shell manhole 5 may be provided at a position that is shifted from the center of the ceiling wall 34. Further alternatively, the inner shell manhole 5 may be provided in the peripheral wall 33 at a position above an inner ring 7. The inner ring 7 will be described below.

The inner shell manhole 5 is formed by a manhole pipe 51, which penetrates the ceiling wall 34. The inner shell manhole 5 is sealed by a manhole cover 52. The manhole cover 52 is fixed by bolts or the like to a flange provided on the upper end of the manhole pipe 51.

Similarly, the outer shell dome 42 includes a tubular peripheral wall 43 and a ceiling wall 44. The peripheral wall 43 rises from the outer shell main part 41, and the ceiling wall 44 seals an upper opening of the peripheral wall 43. An outer shell manhole 6 is provided in the upper portion of the outer shell dome 42. In the present embodiment, the outer shell manhole 6 is provided in the ceiling wall 44. In the illustrated example, the outer shell manhole 6 is provided at the center of the ceiling wall 44. Alternatively, the outer shell manhole 6 may be provided at a position that is shifted from the center of the ceiling wall 44. Further alternatively, the outer shell manhole 6 may be provided in the peripheral wall 43 at a position above an outer ring 9. The outer ring 9 will be described below.

The outer shell manhole 6 is formed by a manhole pipe 61, which penetrates the ceiling wall 44. The outer shell manhole 6 is sealed by a manhole cover 62. The manhole cover 62 is fixed by bolts or the like to a flange provided on the upper end of the manhole pipe 61.

In the illustrated example, the aforementioned pipes 14 penetrate the peripheral wall 33 of the inner shell dome 32 and the peripheral wall 43 of the outer shell dome 42. Alternatively, the pipes 14 may penetrate the ceiling wall 34 of the inner shell dome 32 and the ceiling wall 44 of the outer shell dome 42.

A bellows 45 is incorporated in the peripheral wall 43 of the outer shell dome 42. The bellows 45 divides the outer shell dome 42 into a lower fixed portion 42A and an upper movable portion 42B. The movable portion 42B is a portion penetrated by the pipes 14 and provided with the outer shell manhole 6.

The inner ring 7, a cylindrical partition wall 8, and the outer ring 9 are disposed in the second vacuum space 22 between the inner shell dome 32 and the outer shell dome 42. The inner ring 7, the partition wall 8, and the outer ring 9 constitute a suspending structure that supports the movable portion 42B of the outer shell dome 42.

The inner ring 7 is a plate parallel to a radial direction that is orthogonal to the axial direction (protruding direction) of the inner shell dome 32. The inner ring 7 is fixed to the inner shell dome 32. For example, the inner circumferential edge portion of the inner ring 7 is joined to the outer circumferential surface of the peripheral wall 33 by welding.

The outer ring 9 is a plate parallel to the inner ring 7. The outer ring 9 is positioned below the inner ring 7, and fixed to the movable portion 42B of the outer shell dome 42. For example, the outer circumferential edge portion of the outer ring 9 is joined to the inner circumferential surface of the peripheral wall 43 by welding.

The partition wall 8 couples the inner ring 7 and the outer ring 9. As a result, the second vacuum space 22 is partitioned off into an upper vacuum space 24 and a lower vacuum space 23. The upper vacuum space 24 is a space including a region between the inner shell manhole 5 and the outer shell manhole 6. Specifically, when the outer shell manhole 6 is opened, the upper vacuum space 24 communicates with the atmospheric space through the outer shell manhole 6, and when the inner shell manhole 5 is opened, the upper vacuum space 24 communicates with the space in the inner shell 3 through the inner shell manhole 5.

In the present embodiment, the outer circumferential edge portion of the inner ring 7 is joined to the inner circumferential surface of the partition wall 8, and the lower end portion of the partition wall 8 is joined to the upper surface of the outer ring 9. These portions are joined to the respective surfaces by, for example, welding. Alternatively, the upper end portion of the partition wall 8 may be joined to the lower surface of the inner ring 7, and the inner circumferential edge portion of the outer ring 9 may be joined to the outer circumferential surface of the partition wall 8.

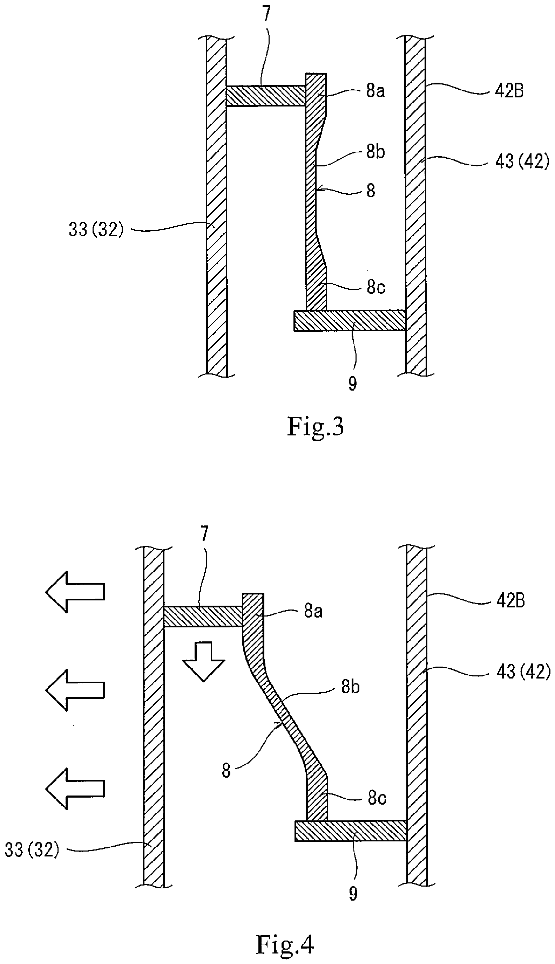

As shown in FIG. 3, a middle portion 8b of the partition wall 8 is less thick than an upper end portion 8a and a lower end portion 8c of the partition wall 8. It should be noted that the thickness of the upper end portion 8a of the partition wall 8 may be the same as, or different from, the thickness of the lower end portion 8c.

In the present embodiment, the outer circumferential surface of the partition wall 8 is recessed inward in the radial direction at the middle portion 8b. In other words, a groove that is open outward in the radial direction and continuous in the circumferential direction is formed in the middle portion 8b of the partition wall 8. Alternatively, the outer circumferential surface of the partition wall 8 may be recessed outward in the radial direction at the middle portion 8b.

Further, in the present embodiment, the groove formed by the upper end portion 8a, the middle portion 8b, and the lower end portion 8c of the partition wall 8 has a vertically symmetrical shape. That is, the angle of an inclined surface between the upper end portion 8a and the middle portion 8b is the same as the angle of an inclined surface between the lower end portion 8c and the middle portion 8b. Alternatively, the groove formed by the upper end portion 8a, the middle portion 8b, and the lower end portion 8c of the partition wall 8 may have a vertically non-symmetrical shape.

As described above, in the double-shell tank 2 of the present embodiment, the middle portion 8b of the partition wall 8 has a reduced thickness. Therefore, as compared to a case where the partition wall 8 is a cylindrical wall having a constant thickness, the entry of heat via the outer ring 9, the partition wall 8, and the inner ring 7 can be reduced. In addition, when thermal contraction of the inner shell 3 occurs, the inner shell dome 32 is also reduced in diameter. At the time, since the middle portion 8b of the partition wall 8 has a reduced thickness, the partition wall 8 becomes deformed such that the cross section of the partition wall 8 becomes substantially S-shaped as shown in FIG. 4. As a result, a great stress is prevented from being applied to the joint between the partition wall 8 and the outer ring 9 and the joint between the partition wall 8 and the inner ring 7. This makes it possible to keep sufficient strength of the joints between the partition wall 8 and the outer ring 9, and between the partition wall 8 and the inner ring 7.

Further, in the present embodiment, the outer circumferential surface of the partition wall 8 is recessed inward in the radial direction at the middle portion 8b. Accordingly, in this case, the cross-sectional area of the middle portion 8b of the partition wall 8 as seen in the axial direction of the inner shell dome 32 is less than in a case where the inner circumferential surface of the partition wall 8 is recessed outward in the radial direction at the middle portion 8b. Therefore, as compared to the case where the inner circumferential surface of the partition wall 8 is recessed outward in the radial direction at the middle portion 8b, the entry of heat via the outer ring 9, the partition wall 8, and the inner ring 7 can be reduced more effectively.

The present invention is not limited to the above-described embodiment. Various modifications can be made without departing from the scope of the present invention.

### Reference Signs List

- 1: liquefied gas carrier ship
- 2: double-shell tank
- 21: first vacuum space
- 22: second vacuum space
- 23: lower vacuum space
- 24: upper vacuum space
- 3: inner shell
- 31: inner shell main part
- 32: inner shell dome
- 4: outer shell
- 41: outer shell main part
- 42: outer shell dome
- 5: inner shell manhole
- 6: outer shell manhole
- 7: inner ring
- 8: partition wall
- 8a: upper end portion
- 8b: middle portion
- 8c: lower end portion
- 9: outer ring

## Claims

1. A double-shell tank comprising:
an inner shell (3) including an inner shell main part (31) and an inner shell dome (32), the inner shell main part (31) storing liquefied gas, the inner shell dome (32) protruding upward from the inner shell main part (31);
an inner shell manhole (5) provided in an upper portion of the inner shell dome (32);
an outer shell (4) including an outer shell main part (41) and an outer shell dome (42), the outer shell main part (41) surrounding the inner shell main part (31) with a first vacuum space (21) formed between the outer shell main part (41) and the inner shell main part (31), the outer shell dome (42) surrounding the inner shell dome (32) with a second vacuum space (22) formed between the outer shell dome (42) and the inner shell dome (32);
an outer shell manhole (6) provided in an upper portion of the outer shell dome (42);
a bellows (45) incorporated in the outer shell dome (42), such that the bellows (45) divides the outer shell dome (42) into a lower fixed portion (42A) and an upper movable portion (42B);
an inner ring (7) fixed to the inner shell dome (32) in the second vacuum space (22);
an outer ring (9) fixed to the movable portion (42B) of the outer shell dome (42) in the second vacuum space (22);
a cylindrical partition wall (8) that couples the inner ring (7) and the outer ring (9), and partitions off the second vacuum space (22) into an upper vacuum space (24) and a lower vacuum space (23), the upper vacuum space (24) being a space including a region between the inner shell manhole (5) and the outer shell manhole (6), the double-shell tank being **characterised in that**
the outer ring is positioned below the inner ring; and
a middle portion (8b) of the partition wall (8) is less thick than both end portions (8a, 8c) of the partition wall (8).

2. The double-shell tank according to claim 1, wherein
an outer circumferential surface of the partition wall (8) is recessed inward in a radial direction at the middle portion (8b) of the partition wall (8).

3. A liquefied gas carrier ship comprising the double-shell tank according to claim 1 or 2.

## Patentansprüche

1. Doppelwandiger Tank, umfassend:
eine Innenschale (3), welche einen Innenschalenhauptteil (31) und eine Innenschalenkuppel (32) beinhaltet, wobei der Innenschalenhauptteil (31) Flüssiggas speichert, wobei die Innenschalenkuppel (32) von dem Innenschalenhauptteil (31) nach oben vorsteht;
ein Innenschalenmannloch (5), welches in einem oberen Abschnitt der Innenschalenkuppel (32) bereitgestellt ist;
eine Außenschale (4), welche einen Außenschalenhauptteil (41) und eine Außenschalenkuppel (42) beinhaltet, wobei der Außenschalenhauptteil (41) den Innenschalenhauptteil (31) umgibt und zwischen dem Außenschalenhauptteil (41) und dem Innenschalenhauptteil (31) ein erster Vakuumraum (21) gebildet ist, wobei die Außenschalenkuppel (42) die Innenschalenkuppel (32) umgibt und zwischen der Außenschalenkuppel (42) und der Innenschalenkuppel (32) ein zweiter Vakuumraum (22) gebildet ist;
ein Außenschalenmannloch (6), welches in einem oberen Abschnitt der Außenschalenkuppel (42) bereitgestellt ist;
einen Balg (45), welcher in die Außenschalenkuppel (42) integriert ist, sodass der Balg (45) die Außenschalenkuppel (42) in einen unteren festen Abschnitt (42A) und einen oberen beweglichen Abschnitt (42B) unterteilt;
einen Innenring (7), welcher an der Innenschalenkuppel (32) in dem zweiten Vakuumraum (22) befestigt ist;
einen Außenring (9), welcher an dem beweglichen Abschnitt (42B) der Außenschalenkuppel (42) in dem zweiten Vakuumraum (22) befestigt ist;
eine zylindrische Trennwand (8), welche den Innenring (7) und den Außenring (9) koppelt, und den zweiten Vakuumraum (22) in einen oberen Vakuumraum (24) und einen unteren Vakuumraum (23) unterteilt, wobei der obere Vakuumraum (24) ein Raum ist, welcher einen Bereich zwischen dem Innenschalenmannloch (5) und dem Außenschalenmannloch (6) beinhaltet, wobei der doppelwandige Tank **dadurch gekennzeichnet ist, dass**
der Außenring unterhalb des Innenrings positioniert ist; und
ein Mittelabschnitt (8b) der Trennwand (8) weniger dick ist als die beiden Endabschnitte (8a, 8c) der Trennwand (8).

2. Doppelwandiger Tank nach Anspruch 1, wobei
eine Außenumfangsfläche der Trennwand (8) an dem Mittelabschnitt (8b) der Trennwand (8) nach innen in einer radialen Richtung vertieft ist.

3. Flüssiggastransportschiff, welches den doppelwandigen Tank nach Anspruch 1 oder 2 umfasst.

## Revendications

1. Citerne à double coque, comprenant :
une coque interne (3) incluant une partie principale de coque interne (31) et un dôme de coque interne (32), la partie principale de coque interne (31) stockant du gaz liquéfié, le dôme de coque interne (32) faisant saillie vers le haut depuis la partie principale de coque interne ;
un regard de coque interne (5) ménagé dans une partie supérieure du dôme de coque interne (32) ;
une coque externe (4) incluant une partie principale de coque externe (41) et un dôme de coque externe (42), la partie principale de coque externe (41) entourant la partie principale de coque interne (31) avec un premier espace sous vide (21) formé entre la partie principale de coque externe (41) et la partie principale de coque interne (31), le dôme de coque externe (42) entourant le dôme de coque interne (32) avec un second espace sous vide (22) formé entre le dôme de coque externe (42 ) et le dôme de coque interne (32) ;
un regard de coque externe (6) ménagé dans une partie supérieure du dôme de coque externe (42) ;
un soufflet (45) incorporé dans le dôme de coque externe (42), de telle sorte que le soufflet (45) divise le dôme de coque externe (42) en une partie fixe inférieure (42A) et une partie mobile supérieure (42B) ;
un anneau interne (7) fixé au dôme de coque interne (32) dans le second espace sous vide (22) ;
un anneau externe (9) fixé à la partie mobile (42B) du dôme de coque externe (42) dans le second espace sous vide (22) ;
une paroi de séparation cylindrique (8) qui couple l'anneau interne (7) et l'anneau externe (9), et sépare le second espace sous vide (22) en un espace sous vide supérieur (24) et un espace sous vide inférieur (23), l'espace sous vide supérieur (24) étant un espace incluant une région entre le regard de coque interne (5) et le regard de coque externe (6), la citerne à double coque étant **caractérisée en ce que**
l'anneau externe est positionné en dessous de l'anneau interne ; et
une partie médiane (8b) de la paroi de séparation (8) est moins épaisse que les deux parties d'extrémité (8a, 8c) de la paroi de séparation (8).

2. Citerne à double coque selon la revendication 1, dans laquelle
une surface circonférentielle externe de la paroi de séparation (8) est évidée vers l'intérieur dans une direction radiale au niveau de la partie médiane (8b) de la paroi de séparation (8).

3. Navire transporteur de gaz liquéfié comprenant la citerne à double coque selon la revendication 1 ou 2.
